# FASCICULE DE BREVET EUROPEEN

(11) **EP 1 179 271 B1**
(45) Date de publication et mention de la délivrance du brevet: **08.07.2015**
(21) Numéro de dépôt: 00925378.2
(22) Date de dépôt: 03.05.2000
(51) Int. Cl.: H04W 88/02, H04M 1/725

(54) **TERMINAL RADIOTELEPHONIQUE AVEC UNE CARTE A PUCE DOTEE D'UN NAVIGATEUR**
FUNKFERNSPRECHGERÄT MIT EINER CHIPKARTE MIT NAVIGATOR
RADIOTELEPHONE TERMINAL WITH SMART CARD EQUIPPED WITH BROWSER

(30) Priorité: 11.05.1999 FR 9906055
(43) Date de publication de la demande: 13.02.2002
(73) Titulaire: Gemalto SA, 92190 Meudon (FR)
(72) Inventeur: GAILLARD, Eric, 83430 Saint Mandrier (FR); CHARBONNIER, Bertrand, 13112 La Destrousse (FR); VOYER, Jérôme, 13600 La Ciotat (FR)
(86) Numéro de dépôt international: PCT/FR2000/001194
(87) Numéro de publication internationale: WO 2000/069191

(56) Documents cités:
- WO-A-97/32439
- WO-A-98/33343
- FR-A- 2 761 219
- US-A- 5 719 918
- B.O.: "Erfolgreicher Test der Guthabenkarte" NTZ, no. 5, 1996, pages 33-34, XP000596206 Berlin, DE

## Description

La présente invention concerne d'une manière générale des interactions entre une carte à puce incluse dans un terminal radiotéléphonique mobile et une entité externe au réseau de radiotéléphonie dont dépend le terminal, telle qu'un serveur, afin que l'abonné possesseur de la carte à puce puisse accéder à des services déportés sur le serveur.

Le document de brevet FR 2 761 219 décrit une technique pour accéder à un service disponible dans une carte à puce.

L'invention fait appel aux caractéristiques de la carte SIM évoluée d'un terminal radiotéléphonique de type GSM, laquelle carte SIM contient une intelligence de service connue sous l'ensemble de commandes "SIM Toolkit" globalement non reconfigurables. Actuellement, grâce à la carte SIM Toolkit, un terminal mobile a la possibilité d'établir une requête auprès du serveur pour obtenir des informations, par exemple des informations météorologiques. Toutefois, lorsque le message de demande est envoyé par la carte SIM au serveur, l'application SIM Toolkit est terminée, et l'abonné devra parcourir de nouveau le menu affiché dans son terminal mobile pour consulter la réponse à sa demande, en l'occurrence les informations météorologiques.

L'invention vise à améliorer l'intelligence des cartes à puce dans les terminaux radiotéléphoniques mobiles afin de faciliter l'accessibilité d'un abonné utilisant un tel terminal lorsqu'il consulte une base de données ou des services de toute sorte. En particulier, l'invention vise à fournir des facilités a un abonné possesseur d'un terminal radiotéléphonique mobile pour dialoguer avec un serveur de services par l'intermédiaire d'un échange de messages de requête et de réponse.

A cette fin, une carte à puce pour terminal radiotéléphonique mobile dans un réseau de radiotéléphonie est caractérisée en ce qu'elle comprend un moyen de navigation interactif avec un serveur de services externe au réseau de radiotéléphonie et déclenchable par sélection dans le terminal mobile, ou bien déclenchable à distance par le serveur de services.

Grâce au moyen de navigation, typiquement implanté sous forme de logiciel dans les mémoires ROM et/ou EEPROM de la carte à puce du terminal mobile, l'abonné accède directement aux informations transmises par le serveur en réponse aux demandes émises par la carte à puce, sous la forme d'une page d'écran présentée par l'afficheur du terminal sans que l'abonné intervienne par une quelconque manipulation du clavier de son terminal. La lecture et l'interprétation du message de réponse transmis par le serveur sont réalisées directement par le moyen de navigation qui est en état de fonctionnement tant que l'abonné accepte le dialogue avec le serveur, ou après une session d'échanges de messages entre la carte SIM et le serveur, par exemple à la suite de sélections successives de caractéristiques d'un service parmi des listes transmises par le serveur.

L'implantation du moyen de navigation dans la carte à puce entraîne implicitement une transmission bidirectionnelle entre celle-ci et le serveur, c'est-à-dire une interaction entre ces deux entités afin d'échanger des requêtes initiées par l'abonné et des réponses générées par le serveur. De préférence, les messages de demande transmis par la carte à puce et les messages de réponse transmis par le serveur sont des messages courts (Short Message Service) transmis dans un canal bidirectionnel dédié entre le terminal et le serveur tel que le canal de signalisation dédié en mode connecté SDCCH (Stand Alone Dedicated Control CHannel) dans le réseau de radiotéléphonie selon la norme GSM.

Afin d'appeler automatiquement le serveur, la carte contient des adresses de serveurs et d'entités intervenant dans des communications entre le terminal mobile et les serveurs.

Selon une autre caractéristique de l'invention, la carte à puce dans le terminal mobile comprend des modules "plug in" de bibliothèques de fonctions supplémentaires inclus en mémoire EEPROM. Ces fonctions supplémentaires sont chacune déclenchable par le serveur à travers le moyen de navigation. Par exemple, certaines de ces bibliothèques de fonctions peuvent être téléchargées pendant la durée de vie opérationnelle de la carte à puce et peuvent servir au calcul d'un cryptogramme ou au chiffrement/déchiffrement d'un message. Toutefois, la carte à puce peut n'inclure aucun logiciel spécifique à un service quelconque.

L'invention concerne également des procédés de communication entre une carte à puce incluse dans un terminal radiotéléphonique mobile d'un réseau de radiotéléphonie, et un serveur de services externe au réseau de radiotéléphonie.

Dans un premier procédé relatif à un déclenchement du moyen de navigation par l'abonné du terminal pour consulter le serveur, les étapes suivantes sont prévues :
- implémenter un moyen de navigation dans la carte à puce tel que défini ci-dessus ;
- mémoriser au moins une adresse du serveur dans la carte ;
- effectuer un échange de messages comprenant les deux étapes suivantes :
   émettre un premier message établi par le moyen de navigation depuis le terminal mobile vers le serveur suite à une sélection dans le terminal, et
   émettre un deuxième message depuis le serveur en réponse au premier message afin que le moyen de navigation commande l'affichage de données contenues dans le deuxième message sur un afficheur du terminal mobile ; et
- procéder à un autre échange de messages si l'une des données du deuxième message est sélectionnée et validée afin d'émettre un autre premier message contenant la donnée sélectionnée, établi par le moyen de navigation et émis par le terminal mobile vers le serveur.

Dans un deuxième procédé de communication relatif à un déclenchement à distance du moyen de navigation dans la carte du terminal radiotéléphonique mobile par le serveur pour offrir un service, les étapes suivantes sont prévues :
- implémenter un moyen de navigation dans la carte à puce tel que défini ci-dessus ;
- émettre un message d'offre de service depuis le serveur vers le terminal mobile afin d'y afficher une offre de service ;
- après validation de l'offre, déclencher le moyen de navigation et effectuer un échange de messages comprenant les deux étapes suivantes :
- émettre un premier message établi par le moyen de navigation depuis le terminal mobile vers le serveur suite à une sélection dans le terminal,
- émettre un deuxième message depuis le serveur en réponse au premier message afin que le moyen de navigation commande l'affichage de données contenues dans le deuxième message sur un afficheur du terminal mobile, et
- procéder à un autre échange de messages si l'une des données du deuxième message est sélectionnée et validée afin d'émettre un autre premier message contenant la donnée sélectionnée, établi par le moyen de navigation et émis par le terminal mobile vers le serveur.

Entre les deux étapes d'émettre, la carte à puce attend de recevoir complètement le deuxième message et invite l'abonné à attendre sans qu'il puisse passer à un autre menu. Plus précisément, le procédé comprend une étape, entre les deux étapes d'émettre, pour maintenir un affichage prédéterminé dans le terminal sous la commande de la carte à puce tant que celle-ci n'a pas reçu le deuxième message, ou tant qu'une touche spécifique du terminal n'est pas sollicitée.

Dans certains cas, l'opérateur exploitant le serveur exige que soit certifiée une demande de l'abonné, par exemple pour une transaction payante. Les procédés de communication comprennent alors une étape de certifier un premier message à établir par le moyen de navigation et à émettre par le terminal mobile selon une fonction d'une bibliothèque mémorisée dans la carte, en réponse à un deuxième message précédant le premier message et contenant en outre une demande de certification par le serveur.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'une liaison de télécommunication entre un terminal radiotéléphonique mobile et un serveur de services à travers un réseau de radiotéléphonie ;
- la figure 2 montre des étapes d'acheminement de deux messages entre le terminal mobile et le serveur sur la base du bloc-diagramme de la figure 1 ;
- les figures 3A et 3B montrent des étapes d'un procédé de navigation lorsque le terminal a demandé un service ; et
- la figure 4 montre des étapes d'un procédé de navigation lorsque le serveur initie un service pour le terminal.

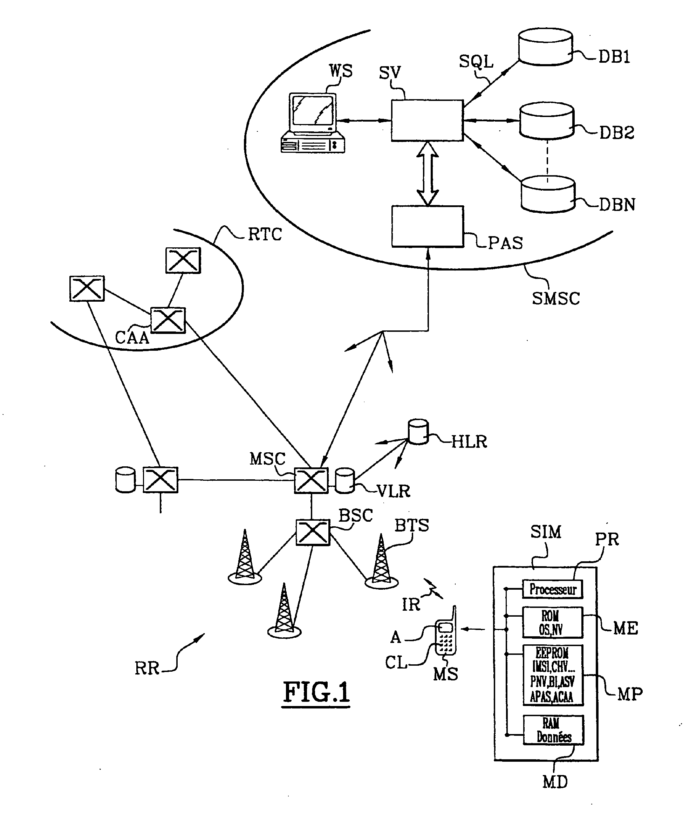

L'invention est décrite ci-après dans le cadre d'un réseau de radiotéléphonie cellulaire numérique RR de type GSM 900 ou DCS 1800 ou DCS 1900 montré schématiquement à la figure 1.

Le réseau RR comprend principalement des terminaux radiotéléphoniques mobiles dont un MS est représenté à la figure 1 et auquel on se référera dans la suite, ainsi qu'un réseau fixe à travers lequel sont transmis notamment des messages de signalisation à canaux sémaphores SS7 (Signalling System Number 7), de contrôle, de données et de voix. L'entité principale du réseau RR susceptible d'interagir avec le terminal MS est un commutateur de service mobile MSC relié à au moins un commutateur téléphonique à autonomie d'acheminement CAA du réseau téléphonique commuté RTC. Le commutateur MSC gère des communications pour des terminaux mobiles visiteurs, y compris le terminal MS, se trouvant à un instant donné dans la zone de localisation desservie par le commutateur MSC. Les autres entités d'intérêt du réseau RR sont un enregistreur de localisation des visiteurs VLR relié au commutateur MSC, l'un des contrôleurs de station de base BSC reliés au commutateur MSC et gérant notamment l'allocation de canaux aux terminaux mobiles visiteurs, et l'une de stations de base BTS reliées au contrôleur BSC couvrant la cellule radioélectrique où le terminal MS se trouve à l'instant donné.

Le réseau de radiotéléphonie RR comprend également un enregistreur de localisation nominal HLR analogue à une base de données contenant pour chaque terminal radiotéléphonique l'identité internationale d'une carte à puce SIM (Subscriber Identity Mobile) incluse dans le terminal MS, c'est-à-dire l'identité de l'abonné possesseur de la carte SIM, le profil d'abonnement de l'abonné et le numéro de l'enregistreur VLR auquel est rattaché momentanément le terminal mobile.

Le terminal radiotéléphonique mobile MS d'un abonné comprend un module à microprocesseur amovible, dit carte à puce SIM reliée à travers une interface homme-machine incluant un lecteur de carte dans le terminal, cette interface desservant un clavier CL, un afficheur A et des prises périphériques du terminal mobile. La carte à puce SIM contient principalement un microprocesseur PR, une mémoire ME de type ROM incluant un système d'exploitation OS de la carte et des algorithmes d'application spécifiques, une mémoire non volatile MP de type EEPROM qui contient toutes les caractéristiques liées à l'abonné, notamment un code secret de possesseur de carte CHV (Card Holder Verification) qui correspond à l'ancien numéro d'identification personnel PIN (Personal Identity Number) composé au clavier par l'abonné pour accéder à un service, et une mémoire MD de type RAM destinée essentiellement au traitement des données à recevoir du microcontrôleur inclus dans le terminal et à transmettre vers ce microcontrôleur.

Selon l'invention, la carte SIM héberge dans la mémoire ROM ME un moteur de navigation, dit navigateur (browser) NV. Grâce au navigateur, l'abonné du terminal MS est directement en communication avec un serveur de services SV.

Comme montré à la figure 1, le serveur SV est inclus dans un centre de services de messages courts SMSC (Short Message Service Center) qui est une entité externe au réseau de radiotéléphonie RR et qui est reliée à travers une passerelle d'accès PAS directement à des commutateurs de services mobiles MSC, les adresses ASV et APAS du serveur SV et de la passerelle PAS étant pré-mémorisées dans la mémoire MP de la carte SIM. En variante, la passerelle PAS est reliée à des commutateurs MSC du réseau RR à travers un réseau de transmission de paquets de type X.25, ou à travers une interface RNIS, par exemple de type T2 à 2048kbit/s avec 30 canaux d'informations B et un canal D à 64 kbit/s, ou à travers un réseau ATM, le cas échéant à travers le réseau téléphonique commuté RTC. Selon une autre variante, la passerelle est reliée à un commutateur CAA du réseau RTC dont l'adresse ACAA est pré-mémorisée dans la mémoire MP de la carte SIM.

Pour communiquer avec le serveur SV, la carte SIM est du type pro-active afin de déclencher des actions dans le terminal mobile MS selon la recommandation GSM 11.14 (SIM TOOLKIT). Cette recommandation propose une extension du jeu de commandes du système d'exploitation OS inclus dans la mémoire ROM MS de la carte à puce SIM et du terminal mobile pour mettre à disposition du terminal radiotéléphonique mobile des informations par la carte à puce SIM.

La carte SIM et le centre de service SMSC dialogue à travers un canal de messages courts SMS (Short Message Service). Les messages courts qui ont une longueur maximale de 140 octets acheminent des informations de type texte depuis la carte SIM du terminal MS vers le serveur SV, et également acheminent des instructions, telles que des pages d'écran, depuis le serveur vers la carte à puce SIM. Lors de ces échanges d'information entre la carte SIM et le serveur SV, le terminal MS est transparent à ces informations et ne les interprète pas. De même, la passerelle PAS reçoit les messages entrants SMS transmis par le commutateur de rattachement MSC et les adresses au serveur SV sans les interpréter. Suivant l'autre sens de transmission, la passerelle PAS récupère des messages d'instruction exécutables ESMS (Executable Short Message Service) transmis par le serveur SV et les encapsule convenablement pour les transmettre à la carte SIM via le réseau RR. De cette manière, la passerelle PAS gère la liaison entre la carte SIM et le serveur SV, et le réseau de radiotéléphonie RR avec le terminal MS est complètement transparent aux messages SMS et ESMS.

Comme montré également à la figure 1, le serveur SV est relié à plusieurs bases de données DB1 à DBn par exemple offrant des services de réservation de places de cinéma, de tables de restaurant ou de livraisons de plat cuisiné. Le serveur interroge les bases de données par des requêtes SQL (Structured Query Language) et collecte les informations demandées lues dans les bases. Chaque base de données inclut un automate de prépaiement de type connu, par exemple en fournissant le numéro d'une carte de crédit. Comme cela sera présenté dans l'exemple décrit plus loin, chaque base de données informe l'abonné/client de l'état des prestations offertes, comme par exemple les horaires et le coût de spectacles et le nombre de places disponibles dans une salle de spectacles. Une station de travail WS est également reliée au serveur SV pour superviser celui-ci et introduire un seul et unique service ou des services ponctuels dans le serveur SV.

Selon l'invention, le navigateur NV implémenté dans la mémoire ROM ME de la carte à puce SIM ainsi que les paramètres de l'abonné tels que numéro d'identification international IMSI, code confidentiel CHV, etc... et des paramètres PNV de l'abonné liés au navigateur, tels que les numéros d'appel ASV, APAS et ACAA, sont pré-enregistrés dans la mémoire non volatile EEPROM MP de la carte à puce et, en raison de la portabilité de la carte SIM, sont indépendants du terminal mobile MS. Les paramètres PNV liés au navigateur comprennent notamment les adresses des différents serveurs SV déportés et administrés par divers fournisseurs de services, ainsi que les adresses des passerelles PAS donnant accès à ces serveurs, et le cas échéant les adresses des centres d'appel à travers lequel transite les messages SMS et ESMS entre le réseau de radiotéléphonie RR et les passerelles PAS.

La mémoire non volatile EEPROM MP héberge également des modules "plug in" sous la forme de bibliothèques de fonctions supplémentaires BI qui peuvent être téléchargées à partir d'un serveur relié au commutateur de service MSC, par exemple à partir du serveur SV montré à la figure 1.

Lors de la mise sur le marché de la carte à puce SIM, la mémoire MP peut ne contenir que le navigateur NV, et les bibliothèques de fonctions BI sont téléchargées pendant la durée de vie opérationnelle de la carte à puce.

Par exemple, au cours des échanges, le serveur SV demande à l'abonné de saisir le code secret CHV pour l'authentifier et lui transmettre une information sensible. Le code secret CHV est géré localement dans la carte SIM au moyen d'une bibliothèque de fonctions qui permet de vérifier la valeur de code bonne ou fausse, de bloquer ou de débloquer l'autorisation de composer le code, de changer le code à travers l'interface homme-machine reliant la carte SIM au clavier du terminal MS. La bibliothèque de fonctions spécifique à la gestion de ce code secret est résidente dans la carte à puce ; cependant l'action d'utiliser une ou plusieurs fonctions de cette bibliothèque est déclenchée directement par le navigateur NV lui-même, et donc pilotée par le serveur déporté SV. Le navigateur retourne le résultat de l'authentification au serveur. Par exemple, la bibliothèque BI contient les fonctions suivantes :
- gestion d'un code secret ;
- calcul d'un cryptogramme qui sert de certificat pour un message, assurant l'intégrité du message ;
- chiffrement d'un message assurant la confidentialité du message ;
- déchiffrement d'un message.

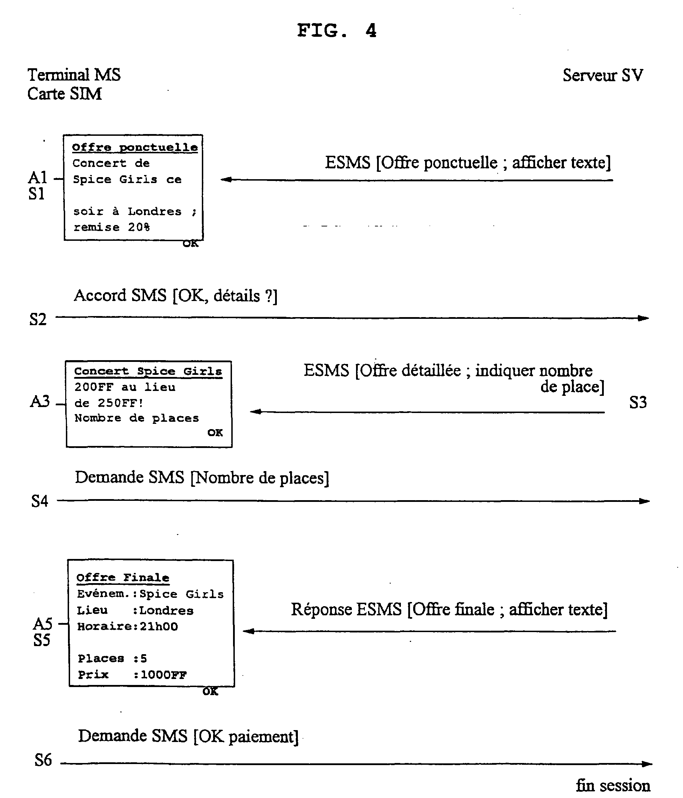

Les échanges de messages entre la carte à puce SIM et le serveur SV sont déclenchés soit à partir de la carte SIM, à la suite d'une sélection d'un item dans le menu affiché sur l'afficheur A du terminal radiotéléphonique mobile MS, ce qui provoque l'émission d'un message d'initialisation de navigation vers le serveur SV afin de déclencher la navigation, soit à partir du serveur SV qui décide lui-même de déclencher les échanges en envoyant un message à la carte, comme cela sera décrit en référence à la figure 4. Le navigateur NV dans la mémoire ROM ME de la carte SIM est ainsi déclenchable soit par l'abonné soit à distance par le serveur SV. Un numéro de session est associé à chaque début d'échange de messages. Ce numéro de session est transmis dans un en-tête des messages de manière à vérifier que ces messages appartiennent bien à la session en cours de développement. A chaque nouvelle session, le numéro de session est incrémenté d'une unité, c'est-à-dire à chaque nouveau début d'échanges de messages.

Les messages échangés entre la carte SIM et le serveur SV sont des messages courts qui peuvent comprendre à la fois des données à afficher dans le terminal MS et des commandes pour leur exploitation dans le terminal. Le navigateur dans la carte SIM interprète le message complet afin qu'à travers le terminal, différentes actions et instructions soient proposées sur l'afficheur A du terminal radiotéléphonique mobile à l'abonné.

Le navigateur NV dans la carte SIM est susceptible d'établir cinq types de message à émettre par le terminal vers le serveur SV :
- un message d'initialisation envoyé au serveur suite au choix de l'item déclenchant le navigateur NV et le début d'au moins un échange de messages avec le serveur par l'abonné sur le terminal et correspondant à une ouverture de session ;
- un message d'annulation envoyé au serveur lorsque l'abonné décide de mettre fin à un échange de messages avec le serveur SV ce qui arrête la session ; cette action peut être déclenchée par la sollicitation d'une touche d'annulation sur le clavier du terminal mobile ;
- un message de demande SMS contenant, le cas échéant, au moins un item sélectionné dans une liste d'items demandée par l'abonné, transmise préalablement par le serveur SV et accompagnée d'une demande de sélection par le serveur SV ; par exemple, le message de demande retourne une ville choisie par l'abonné dans une liste de villes proposée par le serveur ; le message de réponse peut être certifié sur la demande du serveur ;
- un message d'erreur envoyé au serveur SV pour lui notifier une erreur détectée dans un message de réponse ESMS ; le message d'erreur contient le type d'erreur et la localisation de l'erreur dans le message de demande erroné et arrête la session en cours ;
- un message d'accord envoyé au serveur SV par l'abonné pour accepter un échange de messages initié par le serveur, c'est-à-dire une ouverture de session initiée par le serveur, comme on le verra en référence à la figure 4.

Les messages ESMS transmis par le serveur SV à la carte SIM peuvent être certifiés et contiennent des données et du code exécutable pour établir par le navigateur par exemple une requête à afficher sur l'afficheur A du terminal MS afin que l'abonné choisisse par exemple un service parmi une liste, ou pour lui donner une information tel qu'un tarif à afficher, ou encore pour exécuter toute action dans la carte SIM, telle qu'une mise à jour d'un fichier dans la carte. Un message du serveur peut contenir également un identifiant d'un module "plug in" de fonctions supplémentaires à exécuter dans la carte ainsi qu'une information indiquant que la réponse au message doit être certifiée.

Un message à transmettre ayant une longueur limitée maximale de 140 octets, le message est fragmenté en plusieurs sous-messages qui contiennent respectivement des numéros d'ordre croissants jusqu'au nombre total de sous-messages lorsque les données ou le code exécutable contenu dans le message a une longueur supérieure à la longueur maximale. L'ensemble des messages constitue une séquence de messages. A la réception d'un sous-message, la carte SIM vérifie qu'il appartient à la session en cours grâce à l'ordonnancement des numéros des sous-messages déjà reçus. Les sous-messages sont écrits progressivement dans la mémoire de données EEPROM MD de la carte SIM afin de reconstituer le message émis. Puis, lorsque le message est complètement reconstitué, le navigateur NV exécute l'instruction selon le code lu dans le message reconstitué.

Le message est exécuté sur la base des fonctionnalités de l'interface homme-machine dans le terminal mobile MS, notamment à travers l'afficheur A et le clavier CL du terminal, et l'abonné agit en conséquence. La réponse de la carte SIM est alors renvoyée au serveur SV.

Grâce au navigateur NV dans la carte SIM, le terminal mobile MS est ensuite placé en attente d'un nouveau message en y affichant le mot "ATTENDRE" pour faire patienter l'abonné. A ce stade, la carte SIM maintient le terminal en état d'affichage du mot "ATTENDRE" tant que la carte n'a pas reçu complètement le message de réponse du serveur SV, ou tant que l'abonné n'a pas sollicité la touche d'annulation de session. Cette surveillance est réalisée sous la commande "Réponse du terminal" (Terminal Response) correspondant à la commande pro-active de l'affichage "ATTENDRE".

Dès qu'un nouveau message ESMS arrive complètement reconstitué, le terminal mobile MS, toujours sous la commande de la carte SIM, quitte l'état d'attente et propose sur l'afficheur A une nouvelle action à l'abonné. Selon l'invention, l'abonné n'a absolument aucune manipulation à faire sur son terminal radiotéléphonique mobile MS pour récupérer un nouveau message du serveur SV.

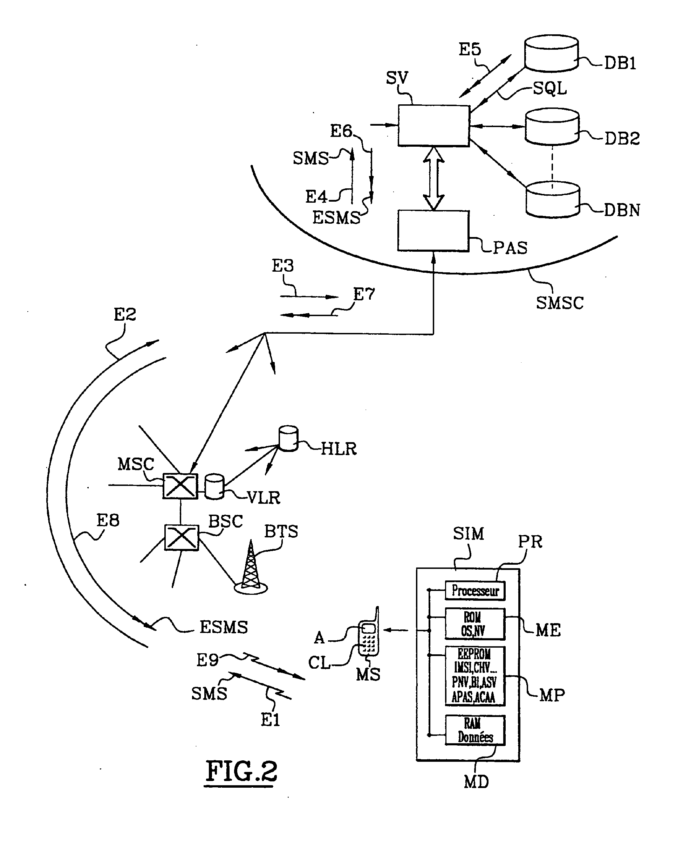

La figure 2 montre les différentes étapes E1 à E9 entre les principales entités présentées ci-dessus en référence à la figure 1, lorsque l'abonné valide l'envoi d'une demande de services disponibles par le terminal MS vers le serveur SV jusqu'à réception d'un nouveau message transmis par le serveur.

Lorsque l'abonné a validé l'item correspondant à un échange avec le serveur, c'est-à-dire correspondant à une demande d'échange de messages avec le serveur, lors de l'ouverture d'une session, ou l'application relative au navigateur NV est activée dans la carte SIM, ou lorsque l'abonné a validé un item parmi une liste affichée sur l'afficheur A, la carte SIM établit et envoie un message d'initialisation ou de demande SMS, par exemple comprenant du texte, vers la station de base BTS à la première étape E1. L'application relative au navigateur demeure active dans la carte SIM, en attente du message de réponse ESMS du serveur. Le message SMS après avoir traversé le réseau fixe du réseau de radiotéléphonie RR jusqu'au commutateur de service MSC à l'étape E2, est conduit vers la passerelle PAS à l'étape E3 qui après remise en forme du message SMS sans interprétation, le transmet au serveur SV à l'étape E4. Le serveur SV interprète le contenu du message reçu SMS de manière à établir une requête SQL vers l'une sélectionnée des bases de données DB1 à DBN en fonction du contenu du message reçu SMS, à l'étape suivante E5. En réponse, la base de données sélectionnée délivre les données demandées au serveur SV.

Les données collectées par le serveur SV et au moins une commande pro-active correspondante sont groupées dans un message de réponse ESMS qui est envoyé par le serveur SV à la passerelle PAS, à l'étape E6. Le cas échéant, la passerelle PAS fragmente le message de réponse ESMS en plusieurs sous-messages si la longueur du message transmis par le serveur SV est supérieure à la longueur maximale des messages à transmettre vers la carte SIM. Aux étapes suivantes E7 et E8, le message ou les sous-messages ESMS sont transmis de la passerelle PAS vers la carte SIM à travers le réseau fixe du réseau de radiotéléphonie RR et sont émis par la station de base BTS à laquelle est rattachée momentanément le terminal MS. Finalement à l'étape E9, le message de réponse ESMS résultant éventuellement du regroupement de sous-messages est reçu par le terminal mobile MS dans lequel la carte SIM interprète le contenu du message de réponse afin de faire exécuter par l'interface homme-machine du terminal l'affichage des données correspondantes contenues dans le message de réponse reçu.

L'interaction entre un message sortant SMS de la carte SIM et un message entrant ESMS dans la carte SIM est résumé par le cycle suivant :
- E1) le terminal mobile MS envoie sous l'action de l'abonné et la commande du navigateur NV un message de demande SMS au serveur SV ;
- E2 à E8) le terminal mobile MS est placé en attente ;
- E9) le terminal mobile quitte son état d'attente en réponse au nouveau message ESMS dont le contenu est proposé à l'abonné ; puis un nouveau cycle est poursuivi en reprenant l'étape E1.

Le cycle ci-dessus correspond à une exécution normale d'un échange de deux messages. Ce cycle est terminé lorsque l'abonné décide de terminer une session en appuyant sur la touche d'annulation du clavier CL du terminal radiotéléphonique MS, ce qui provoque l'émission du message d'annulation par la carte SIM vers le serveur SV. Toutefois le cycle est également terminé lorsque la carte SIM détecte une erreur dans le message de réponse reçu ESMS transmis par le serveur, ce qui provoque l'émission d'un message d'erreur par la carte SIM.

Une session est également terminée lorsque la carte SIM reconnaît un code de fin de session dans un dernier message transmis par le serveur SV à la fin de la session.

Si l'abonné désactive son terminal mobile MS pendant une session, cette session est réputée terminée pour la carte SIM, mais le serveur SV n'est pas informé de cette fin de session. A la mise en marche du terminal mobile, le navigateur NV dans la carte SIM vérifie si la session précédente s'est correctement terminée ; si ce n'est pas le cas, un message d'annulation est envoyé automatiquement par la carte SIM au serveur SV.

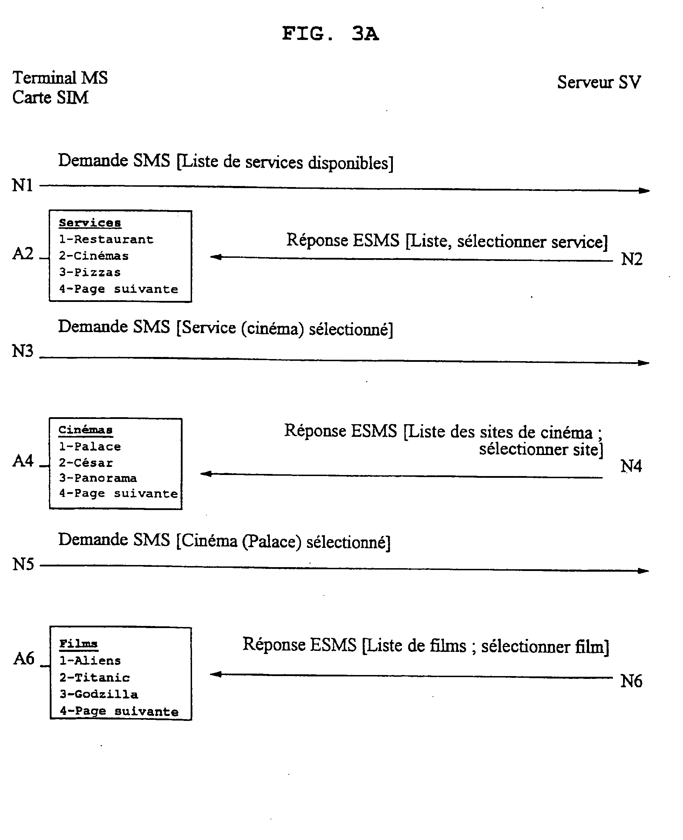

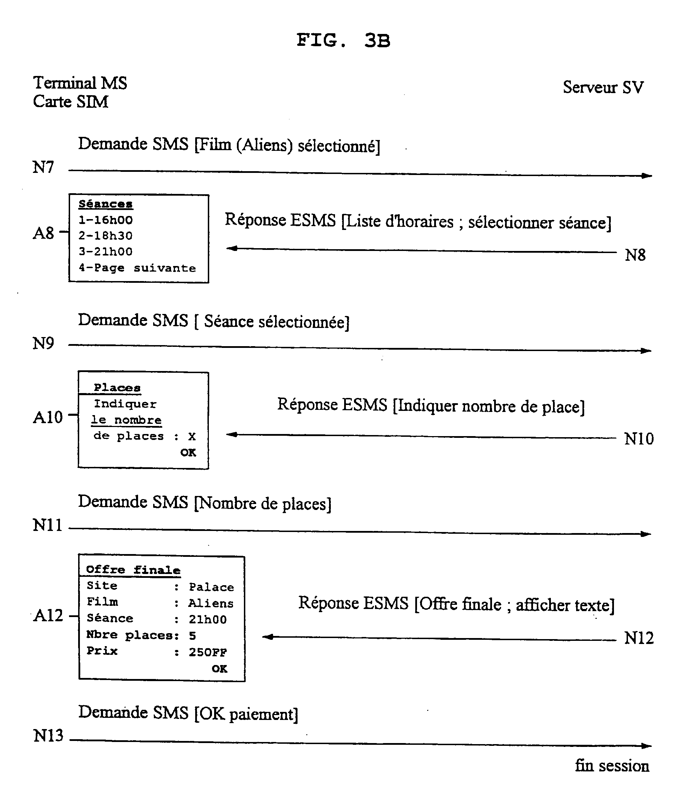

En référence aux figures 3A et 3B, treize étapes de navigation N1 à N13 déclenchables par l'abonné au moyen du navigateur NV sont nécessaires pour que l'abonné du terminal MS sélectionne le nombre de places pour une séance précise d'un film présenté dans l'un des sites de cinéma retenus parmi une liste de services fournie par le serveur SV. Dans les figures 3A et 3B, le contenu de plusieurs pages d'écran A2 à A12 est présenté par l'afficheur A du terminal MS à l'abonné. Les étapes de rang impair N1 à N13 concernent des messages de demande SMS établies par le navigateur NV dans la carte SIM et transmises vers le serveur SV, et les étapes de rang pair N2 à N12 concernent des messages de réponse ESMS contenant bien souvent une liste d'items accompagnée d'une commande pro-active de type "sélectionné", établis par le serveur SV pour être transmis à travers le centre de services SMSC et le réseau de radiotéléphonie RR vers le terminal MS. La sélection d'un item dans une liste affichée et la validation de cette sélection par l'abonné sont commandées au moyen d'une touche de navigation ou d'une touche montée/descente, et d'une touche OK du clavier CL. Chaque couple d'étapes de rang impair et de rang pair concerne ainsi un échange de messages SMS et ESMS analogues à celui qui a été décrit en référence à la figure 2.

A des premières étapes N1 et N2, l'abonné après avoir choisi l'application relative au navigateur dans le terminal MS, demande aux serveurs SV la liste des services disponibles par l'envoi d'un premier message SMS. Le serveur SV lui retourne dans un message de réponse ESMS la liste des services disponibles avec une commande pro-active "sélectionner item (service)". L'afficheur A du terminal MS présente la liste des services A2 comprenant par exemple des services de restaurants, de cinémas, de livraisons de pizzas, et bien d'autres en sélectionnant la ou les pages suivantes.

A l'étape N3, l'abonné sélectionne les cinémas en temps que services. Cette information est envoyée dans un message SMS depuis la carte SIM au serveur SV qui consulte la base de données DB1. Une liste de sites de cinéma est retournée par le serveur SV dans un message ESMS incluant la commande pro-active "sélectionner item (site)". L'afficheur A du terminal MS présente une liste A4 de plusieurs cinémas, comme montré à la fin de l'étape N4.

L'abonné sélectionne l'un des sites de cinéma, par exemple le cinéma Palace, et la carte SIM envoie ce nom de cinéma dans un message SMS au serveur SV à l'étape N5. La liste des films est lue dans la base de données DB1 par le serveur SV qui établit un message de réponse ESMS contenant cette liste de films avec une commande pro-active "sélectionner item (film)" et transmis vers le terminal mobile MS à l'étape N6. L'afficheur A du terminal mobile présente la liste de films A6.

A l'étape N7, l'abonné sélectionne l'un des films de la liste, par exemple le film Aliens, et la carte SIM établit un message de demande SMS contenant le nom du film sélectionné et émis vers le serveur SV. Le serveur SV consulte de nouveau la base de données DB1 à l'étape N8 pour former un message de réponse ESMS contenant la liste des séances relative au film sélectionné et accompagné d'une commande pro-active "sélectionner item (séance)", transmis à l'étape N8 vers le terminal mobile MS. Les séances A8 sont affichées dans l'afficheur A du terminal mobile.

A l'étape N9, l'abonné sélectionne l'une des séances dont le numéro est introduit dans un message de demande SMS généré par la carte SIM et envoyé au serveur SV. Puis le serveur SV vérifie dans la base de données DB1 qu'il reste encore des places disponibles pour la séance sélectionnée du film sélectionné et transmet un message ESMS incluant une commande pro-active "indiquer données (nombre de place)" à l'étape N10. A réception de ce dernier message, le terminal MS établit sous la commande de la carte SIM une page d'écran A10 visualisée sur l'afficheur A du terminal mobile et demandant à l'abonné d'indiquer le nombre de place.

Le nombre des places à réserver est composé au clavier CL et est introduit dans un message de réponse SMS afin que ces places soient réservées pour l'horaire sélectionnée et le film sélectionné après traitement par le serveur SV de ce message SMS, à l'étape N11. En réponse, le serveur SV établit un message ESMS contenant l'ensemble des dernières sélections effectuées par l'abonné et un fanion (OK) de manière à demander un paiement après l'accord de l'abonné. Ce message de réponse ESMS inclut également une commande pro-active "afficher données (texte)" et est transmis par le serveur SV vers le terminal MS. L'afficheur A présente une offre finale A12 indiquant le site de cinéma sélectionné, le film sélectionné, la séance sélectionnée et le nombre de siège sélectionné, ainsi que le prix correspondant au nombre de place.

Finalement à l'étape N13, l'abonné accepte l'offre affichée et déclenche un paiement pour la réservation du nombre de place. La carte SIM établit un message SMS incluant un cryptogramme et transmis au serveur SV. Celui-ci décrypte et enregistre le nombre de place et le paiement validé par l'abonné et débité sur le compte d'une carte de crédit de l'abonné préalablement enregistrée, ou bien directement sur le compte de l'abonnement téléphonique de l'abonné. A ce stade, la session est terminée.

La figure 4 montre des étapes de navigation et de transmission de messages S1 à S6 lorsque le fournisseur de services associé au serveur SV souhaite informer plusieurs abonnés d'une offre de service, le serveur déclenchant lui-même une session par le navigateur NV dans les cartes SIM de ces abonnés.

A la première étape S1, le fournisseur de service établit au moyen de la station de travail WS une offre ponctuelle de service qui est mise sous la forme d'un message de notification ESMS par le serveur SV pour le diffuser vers plusieurs terminaux mobiles MS. Ce message de notification contient un texte d'informations accompagné d'une commande pro-active "afficher données (texte)". A réception de ce message dans la carte SIM, une page d'afficheur A1 est établie pour présenter à l'abonné une offre ponctuelle, par exemple un concert de Spice Girls en soirée à Londres avec 20% de remise. Si à l'étape S2, l'abonné accepte cette offre ponctuelle, en appuyant sur la touche OK du clavier CL du terminal MS, le navigateur NV dans la carte SIM est activé et un message de demande SMS est transmis par la carte SIM au serveur SV pour demander plus d'informations sur ce sujet. Si l'abonné refuse cette offre ponctuelle, en pressant sur la touche d'annulation du clavier CL du terminal MS, un message d'annulation est retourné depuis la carte SIM au serveur SV, et celui-ci retourne à son état de veille.

En réponse au message d'acceptation SMS à l'étape S2, le serveur SV émet à l'étape S3 un message de réponse ESMS incluant une offre commerciale et une commande pro-active "indiquer données (nombre de place)". A la réception de ce message ESMS, l'afficheur A du terminal MS présente l'offre commerciale A3 pour inviter l'abonné à indiquer le nombre de place à réserver pour le concert. A l'étape suivante S4, l'abonné compose sur le clavier CL le nombre de place qu'il souhaite réserver pour ce concert, et la carte SIM établit un message SMS incluant ce nombre de place pour l'envoyer au serveur SV.

Le serveur SV établit un message d'offre finale à l'étape S5 comprenant le nom de l'événement, le lieu, l'horaire et le nombre de places réservées ainsi que le prix total de ces places, accompagné d'une commande pro-active "afficher données (texte)", et d'un fanion (OK) afin de demander l'accord de l'abonné pour le paiement des places. Ce message d'offre finale ESMS reçu dans la carte SIM est traduit par une présentation A5 de cette offre finale sur l'afficheur A du terminal MS. L'abonné accepte à l'étape suivante S6 cette offre en la validant par la touche de clavier OK de manière à déclencher un paiement de la réservation, comme à l'étape N13. Un message SMS avec un cryptogramme est émis par la carte SIM afin qu'en réponse, le serveur SV décrypte le message et mette à jour le nombre des places restantes disponibles pour le concert en question et débite en conséquence le compte de l'abonné. A ce stade, la session d'offre ponctuelle déclenchée par le serveur SV est terminée.

## Revendications

1. Carte à puce (SIM) de type SIM pour communiquer, via un terminal mobile (MS) d'un réseau de radiotéléphonie, avec au moins un serveur d'au moins un service, ledit au moins un serveur étant externe au réseau de radiotéléphonie,
**caractérisée en ce que** la carte à puce est adaptée pour :
- déclencher une mise en oeuvre d'un navigateur (NV) hébergé au sein de la carte à puce ;
- effectuer un échange de messages, l'échange de messages comprenant au moins les deux étapes suivantes :
- émettre (N1 ou S2) un premier message (SMS) initié par un abonné et établi par le navigateur (NV), via le terminal mobile, vers le serveur (SV), et
- recevoir (N2 ou S1) un deuxième message (ESMS) transmis depuis le serveur (SV), via le terminal mobile, au navigateur, le deuxième message comprenant des données à afficher par le terminal et un code exécutable, le navigateur interprétant un contenu du deuxième message, le navigateur exécutant le code exécutable et commandant un affichage des données à afficher comprises au sein du deuxième message, de sorte que le service est exécuté par le serveur en interaction, via le navigateur de la carte à puce, avec l'abonné.

2. Carte à puce selon la revendication 1, dans laquelle le code exécutable permet d'exécuter une des actions suivantes :
- établir une requête pour afficher sur un afficheur du terminal au moins une information ;
- établir une requête pour afficher sur un afficheur du terminal au moins une information sélectionnable par l'abonné- exécuter une action par la carte à puce, telle qu'une mise à jour d'un fichier au sein de la carte à puce.

3. Carte à puce selon la revendication 2, dans laquelle, les données à afficher comprenant au moins une information sélectionnable par l'abonné, l'échange de messages comprend, en outre, émettre au moins un troisième message établi par le navigateur, via le terminal mobile, vers le serveur suite à une sélection par l'abonné de l'information sélectionnable.

4. Carte à puce selon l'une des revendications 1 à 3, dans laquelle un message établi par le navigateur (NV) et transmis au serveur (SV) et un message transmis par le serveur et analysé par le navigateur sont des messages courts transmis au travers d'un canal bidirectionnel dédié entre le terminal mobile (MS) et le serveur (SV).

5. Carte à puce selon l'une des revendications 1 à 4, dans laquelle la carte à puce comprend des moyens pour mémoriser au moins une adresse (ASV, APAS, ACAA) d'au moins un serveur (SV) et d'au moins une entité (PAS, CAA) intervenant au sein d'au moins une communication entre le terminal mobile (MS) et ledit au moins un serveur.

6. Carte à puce selon l'une quelconque des revendications 1 à 5, dans laquelle la carte à puce comprend des moyens pour mémoriser au moins une bibliothèque d'au moins une fonction (BI) déclenchable à distance par le serveur (SV) à travers le navigateur (NV).

7. Carte à puce selon la revendication 6, dans laquelle ladite au moins une bibliothèque d'au moins une fonction (BI) est téléchargeable depuis au moins un serveur externe au réseau de radiotéléphonie.

8. Carte à puce selon l'une des revendications 1 à 7, dans laquelle la mise en oeuvre du navigateur est déclenchable soit par une sélection, par un abonné, d'un service associé à un serveur soit, à distance, par un serveur externe au réseau de radiotéléphonie.

9. Procédé pour communiquer entre une carte à puce (SIM) de type SIM incluse au sein d'un terminal mobile (MS) d'un réseau de radiotéléphonie (RR), et au moins un serveur d'au moins un service (SV), ledit au moins un serveur étant externe au réseau de radiotéléphonie,
**caractérisé par** les étapes suivantes :
- déclencher une mise en oeuvre d'un navigateur (NV) hébergé au sein de la carte à puce (SIM) ;
- effectuer un échange de messages, l'échange de messages comprenant au moins les deux étapes suivantes :
- émettre (N1 ou S2) un premier message (SMS) initié par un abonné et établi par le navigateur (NV) via le terminal mobile (MS) vers le serveur (SV), et
- recevoir (N2 ou S1) un deuxième message (ESMS) transmis depuis le serveur (SV) via le terminal mobile au navigateur, le deuxième message comprenant des données à afficher par le terminal et un code exécutable, le navigateur (NV) interprétant un contenu du deuxième message, le navigateur exécutant le code exécutable et commandant un affichage des données comprises au sein du deuxième message sur un afficheur (A) du terminal mobile (MS), de sorte que le service est exécuté par le serveur en interaction, via le navigateur de la carte à puce, avec l'abonné.

10. Procédé selon la revendication 9, dans lequel un abonné au réseau de radiotéléphonie déclenche, au travers du terminal mobile, la mise en oeuvre du navigateur, le deuxième message succédant au premier message.

11. Procédé selon la revendication 9, dans lequel une réception du deuxième message déclenche la mise en oeuvre du navigateur, le deuxième message précédant le premier message.

12. Procédé selon l'une des revendications 9 à 11, dans lequel le procédé comprend, après l'étape de réception du deuxième message, une étape pour maintenir un affichage prédéterminé dans le terminal mobile (MS) sous la commande de la carte à puce (SIM) tant que la carte à puce n'a pas reçu un autre deuxième message (ESMS), ou tant qu'une touche spécifique du terminal mobile n'est pas actionnée.

13. Procédé selon l'une des revendications 9 à 12, selon lequel le premier message (SMS) établi par le navigateur (NV) et émis par le terminal mobile (SV) appartient à l'ensemble des messages suivants :
- un message d'initialisation déclenchant la mise en oeuvre du navigateur (NV) et le début d'au moins un échange de messages ;
- un message d'annulation pour mettre fin à un échange de messages ;
- un message de demande comprenant au moins un item sélectionné sur l'afficheur (A) du terminal mobile ;
- un message d'accord pour accepter un échange de messages initié par le serveur.

14. Procédé selon l'une des revendications 9 à 13, dans lequel le procédé comprend une étape de certifier un premier message (SMS) à établir par le navigateur (NV) et à émettre depuis la carte à puce, au travers du terminal mobile, selon une fonction d'une bibliothèque (BI) mémorisée au sein de la carte à puce, en réponse à un deuxième message précédant le premier message et comprenant, en outre, une demande de certification par le serveur (SV).

15. Système pour communiquer avec au moins un serveur, le système comprenant un terminal mobile et au moins une carte à puce (SIM), la carte à puce étant comprise au sein du terminal mobile, le terminal mobile comportant un afficheur (A), le système étant susceptible d'être relié à un réseau de radiotéléphonie, ledit au moins un serveur étant externe au réseau de radiotéléphonie,
**caractérisé en ce que** la carte à puce est adaptée pour :
- déclencher une mise en oeuvre d'un navigateur (NV) hébergé au sein de la carte à puce ;
- effectuer un échange de messages, l'échange de messages comprenant au moins les deux étapes suivantes :
- émettre (N1 ou S2) un premier message (SMS) initié par un abonné et établi par le navigateur (NV) vers le serveur (SV), et
- recevoir (N2 ou S1) un deuxième message (ESMS) transmis depuis le serveur (SV) au navigateur, le deuxième message comprenant des données à afficher et un code exécutable, le navigateur (NV) interprétant un contenu du deuxième message, le navigateur (NV) exécutant le code exécutable et commandant un affichage des données à afficher comprises au sein du deuxième message sur l'afficheur (A) du terminal mobile (MS), de sorte que le service est exécuté par le serveur en interaction, via le navigateur de la carte à puce, avec l'abonné.

## Patentansprüche

1. Chipkarte (SIM) vom Typ SIM zur Kommunikation mit wenigstens einem Server wenigstens eines Dienstes Mobilfunknetzüber ein mobiles Terminal (MS) eines Mobilfunknetzes, wobei der wenigstens ein Server extern vom Mobilfunknetz ist,
**dadurch gekennzeichnet, dass** die Chipkarte angepasst ist, um:
- eine Durchführung eines in der Chipkarte gehosteten Browsers (NV) auszulösen;
- einen Nachrichtenaustausch durchzuführen, wobei der Nachrichtenaustausch wenigstens die folgenden zwei Schritte umfasst;
- eine von einem Abonnenten initiierte und vom Browser (NV) hergestellte erste Nachricht (SMS) über das mobile Terminal zum Server (SV) zu übertragen (N1 oder S2); und
- eine von dem Server (SV) über das mobile Terminal an den Browser übertragene zweite Nachricht (ESMS) zu empfangen, wobei die zweite Nachricht vom Terminal anzuzeigende Daten und einen ausführbaren Code umfasst, wobei der Browser einen Inhalt der zweiten Nachricht interpretiert, wobei der Browser den ausführbaren Code ausführt und eine Anzeige der in der zweiten Nachricht beinhalteten anzuzeigenden Daten derart steuert, dass der Dienst vom Server in Interaktion über den Browser der Chipkarte mit dem Abonnenten ausgeführt wird.

2. Chipkarte gemäß Anspruch 1, bei der der ausführbare Code die Durchführung einer der folgenden Aktionen zulässt:
- Herstellung einer Anfrage zur Anzeige wenigstens einer Information auf einem Anzeiger des Terminals;
- Herstellung einer Anfrage zur Anzeige wenigstens einer durch den Abonnenten auswählbaren Information auf einem Anzeiger des Terminals;
- Durchführung einer Aktion durch die Chipkarte, wie z. B. eine Aktualisierung einer Datei in der Chipkarte.

3. Chipkarte gemäß Anspruch 2, bei der die anzuzeigenden Daten wenigstens eine vom Abonnenten auswählbare Information umfassen, der Nachrichtenaustausch darüber hinaus die Übertragung wenigstens einer vom Browser hergestellten dritten Nachricht über das mobile Terminal zum Server im Anschluss an eine Auswahl der auswählbaren Information durch den Abonnenten umfasst.

4. Chipkarte gemäß Anspruch 1 bis 3, bei der eine vom Browser (NV) hergestellte und an den Server (SV) übertragene Nachricht und eine vom Server übertragene und vom Browser analysierte Nachricht über einen dedizierten bidirektionalen Kanal zwischen dem mobilen Terminal (M) und dem Server (SV) übertragene kurze Nachrichten sind.

5. Chipkarte gemäß Anspruch 1 bis 4, bei der die Chipkarte Mittel zum Speichern von wenigstens einer Adresse (ASV, APAS, ACAA) wenigstens eines Servers (SV) und wenigstens einer Entität (PAS, CAA) umfasst, die in wenigstens einer Kommunikation zwischen dem mobilen Terminal (MS) und dem wenigstens einen Server eintreten.

6. Chipkarte gemäß Anspruch 1 bis 5, bei der die Chipkarte Mittel zum Speichern vonwenigstens einer Bibliothek wenigstens einer entfernt durch den Server (SV) über den Browser (NV) auslösbaren Funktion (BI) umfasst.

7. Chipkarte gemäß Anspruch 6, bei der die wenigstens eine Bibliothek wenigstens einer Funktion (BI) ab wenigstens einem von Mobilfunknetz externen Server fernladbar ist.

8. Chipkarte gemäß Anspruch 1 bis 7, bei der die Durchführung des Browsers entweder durch eine Auswahl eines einem Server zugeordneten Dienstes durch einen Abonnenten oder entfernt durch einen von dem Mobilfunknetz externen Server auslösbar ist.

9. Verfahren zur Kommunikation zwischen einer in einem mobilen Terminal (MS) eines Mobilfunknetzes (RR) beinhalteten Chipkarte (SIM) vom Typ SIM und wenigstens einem Server wenigstens eines Dienstes (SV), wobei der wenigstens eine Server extern von dem Mobilfunknetz ist,
**gekennzeichnet durch** die folgenden Schritte:
- Auslösen einer Durchführung eines in der Chipkarte (SIM) gehosteten Browsers (NV),
- Durchführen eines Nachrichtenaustauschs, wobei der Nachrichtenaustausch wenigstens die folgenden zwei Schritte umfasst:
- Übertragung (N1 oder S2) einer von einem Abonnenten initiierten und von dem Browser (NV) über das mobile Terminal (MS) zum Server (SV) hergestellten ersten Nachricht (SMS) und
- Empfang (N2 oder S1) einer von dem Server (SV) über das mobile Terminal an den Browser übertragenen zweiten Nachricht, wobei die zweite Nachricht vom Terminal anzuzeigende Daten und einen ausführbaren Code umfasst, wobei der Browser (NV) einen Inhalt der zweiten Nachricht interpretiert, wobei der Browser den ausführbaren Code ausführt und eine Anzeige der in der zweiten Nachricht beinhalteten Daten auf einem Anzeiger (A) des mobilen Terminals (MS) derart steuert, dass der Dienst vom Server in Interaktion über den Browser der Chipkarte mit dem Abonnenten ausgeführt wird.

10. Verfahren gemäß Anspruch 9, bei dem ein Abonnent des Mobilfunknetzes über das mobile Terminal die Durchführung des Browsers auslöst, wobei die zweite Nachricht auf die erste Nachricht folgt.

11. Verfahren gemäß Anspruch 9, bei dem ein Empfang der zweiten Nachricht die Durchführung des Browsers auslöst, wobei die zweite Nachricht der ersten Nachricht vorausgeht.

12. Verfahren gemäß Anspruch 9 bis 11, bei dem das Verfahren nach dem Empfangsschritt der zweiten Nachricht einen Schritt zur Aufrechterhaltung einer in dem mobilen Terminal (MS) unter der Kontrolle der Chipkarte (SIM) vorbestimmten Anzeige umfasst, solange die Chipkarte keine weitere zweite Nachricht (ESMS) empfangen hat oder solange keine spezifische Taste des mobilen Terminals betätigt worden ist.

13. Verfahren gemäß Anspruch 9 bis 12, nach dem die vom Browser (NV) hergestellte und vom mobilen Terminal (SV) übertragene erste Nachricht (SMS) zu der Gruppe der folgenden Nachrichten gehört:
- eine die Durchführung des Browsers (NV) und den Beginn wenigstens eines Nachrichtenaustauschs auslösende Initialisierungsnachricht;
- eine Stornierungsnachricht, um einen Nachrichtenaustausch zu beenden;
- eine wenigstens ein auf dem Anzeiger (A) des mobilen Terminals ausgewählten Item umfassende Anfragenachricht;
- eine Einverständnisnachricht, um einen vom Server initiierten Nachrichtenaustausch zu akzeptieren.

14. Verfahren gemäß Anspruch 9 bis 13, bei dem das Verfahren einen Schritt zur Zertifizierung einer vom Server (NV) herzustellenden und ab der Chipkarte überzutragenden ersten Nachricht (SMS) über das mobile Terminal gemäß einer Funktion einer in der Chipkarte gespeicherten Bibliothek (BI) als Antwort auf eine der ersten Nachricht vorausgehenden zweite Nachricht umfasst und darüber hinaus eine Zertifizierungsanfrage durch den Server (SV) umfasst.

15. System, um mit dem wenigstens einen Server zu kommunizieren, wobei das System ein mobiles Terminal und wenigstens eine Chipkarte (SIM) umfasst, wobei die Chipkarte in dem mobilen Terminal beinhaltet ist, wobei das mobile Terminal einen Anzeiger (A) umfasst, wobei das System geeignet ist, an ein Funktelefonietz angeschlossen zu werden, wobei der wenigstens eine Server von dem Funktelefonnetz extern ist,
**dadurch gekennzeichnet, dass** die Chipkarte angepasst ist, um:
- eine Durchführung eines in der Chipkarte gehosteten Browsers (NV) auszulösen;
- einen Nachrichtenaustausch durchzuführen, wobei der Nachrichtenaustausch wenigsten die folgenden zwei Schritte umfasst:
- Übertragung (N1 oder S2) einer durch einen Abonnenten initiierten und vom Browser (NV) zum Server (SV) hergestellten ersten Nachricht (SMS); und
- Empfang (N2 oder S1) einer vom Server (SV) zum Browser übertragenen zweiten Nachricht (ESMS), wobei die zweite Nachricht anzuzeigende Daten und einen ausführbaren Code umfasst, wobei der Browser (NV) einen Inhalt der zweiten Nachricht interpretiert, wobei der Browser (NV) den ausführbaren Code ausführt und eine Anzeige der anzuzeigenden, in der zweiten Nachricht auf dem Anzeiger (A) des mobilen Terminals (MS) beinhalteten Daten derart steuert, dass der Dienst vom Server in Interaktion über den Browser der Chipkarte mit dem Abonnenten ausgeführt wird.

## Claims

1. A smart card (SIM) of the SIM type for communicating, via a mobile terminal (MS) in a radiotelephony network, with at least one server of at least one service, the at least one server being external to the radiotelephony network,
**characterized in that** the smart card is adapted to:
- trigger an implementation of a browser(NV) hosted within the smart card;
- carry out an exchange of messages, the exchange of messages comprising at least one of the following two steps of:
- transmitting (N1 or S2) a first message (SMS) initiated by a subscriber and established by the browser (NV), via the mobile terminal, to the server (SV), and
- receiving (N2 or S1) a second message (ESMS) transmitted from the server (SV), via the mobile terminal, to the browser, the second message comprising data to be displayed by the terminal and an executable code, the browser interpreting a content of the second message, the browser executing the executable code and ordering a display of the data to be displayed included within the second message, so that the service is executed by the server which interacts, via the browser of the smart card, with the subscriber.

2. The smart card according to claim 1, wherein the executable code makes it possible to carry out one of the following actions to:
- establish a request for displaying, on a display screen of the terminal, at least one item of information;
- establish a request for displaying, on a display screen of the terminal, at least one item of information which can be selected by the subscriber;
- carry out, by the smart card, one action, such as an update of a file comprised within the smart card.

3. The smart card according to claim 2, wherein the data to be displayed comprising at least one item of information which can be selected by the subscriber, the exchange of messages further comprises a sending of at least a third message established by the browser, via the mobile terminal, to the server, further to a selection by the subscriber of the item of information which can be selected by the subscriber.

4. The smart card according to one of claims 1 to 3, wherein a message established by the browser (NV) and transmitted to the server (SV) and a message transmitted by the server and analyzed by the browser are short messages transmitted through a dedicated bidirectional channel between the mobile terminal (MS) and the server (SV).

5. The smart card according to one of claims 1 to 4, wherein the smart card comprises means for storing at least one address (ASV, APAS ACAA) of at least one server (SV) and of at least one entity (PAS, CAA) which are involved within at least one communication between the mobile terminal (MS) and the at least one server.

6. The smart card according to any one of claims 1 to 5, wherein the smart card comprises means for storing at least one library of at least one function (BI) which can be remotely triggered by the server (SV) through the browser (NV).

7. The smart card according to claim 6, wherein said at least one library of at least one function (BI) can be downloaded from at least one server external to the radiotelephony network.

8. The smart card according to one of claims 1 to 7, wherein the implementation of the browser can be triggered either by the selection, by a subscriber, of a service associated with a server, or, remotely by a server external to the radiotelephony network.

9. A method for communicating between a smart card (SIM) of the SIM type included within a mobile terminal (MS) of a radiotelephony network (RR), and at least one server of at least one service (SV), the at least one server being external to the radiotelephony network,
**characterized by** the following steps of:
- triggering an implementation of a browser (NV) hosted within the smart card (SIM);
- carrying out an exchange of messages, the exchange of messages comprising at least one of the following two steps of:
- transmitting (N1 or S2) a first message (SMS) initiated by a subscriber and established by the browser (NV) via the mobile terminal (MS) to the server (SV); and
- receiving (N2 or S1) a second message (ESMS) transmitted from the server (SV) via the mobile terminal to the browser, the second message comprising data to be displayed by the terminal and an executable code, the browser (NV) interpreting a content of the second message, the browser executing the executable code and ordering a display of the data included within the second message on a display screen (A) of the mobile terminal (MS), so that the service is executed by the server which interacts, via the browser of the smart card, with the subscriber.

10. The method according to claim 9, wherein a subscriber to the radiotelephony network triggers, through the mobile terminal, the implementation of the browser, the second message following the first message.

11. The method according to claim 9, wherein receiving the second message triggers the implementation of the browser, the second message preceding the first message.

12. The method according to one of claims 9 to 11, wherein the method comprises, after the step of receiving the second message, a step of maintaining a predetermined display in the mobile terminal (MS) under the control of the smart card (SIM) as long as the smart card has not received another second message (ESMS), or as long as a specific key of the mobile terminal has not been depressed.

13. The method according to one of claims 9 to 12, wherein the first message (SMS) established by the browser (NV) and transmitted by the mobile terminal (SV) belongs to the set of following messages:
- an initialization message triggering the implementation of the browser (NV) and the starting of at least one exchange of messages;
- a cancellation message for ending an exchange of messages;
- a request message comprising at least one item selected on the display screen (A) of the mobile terminal;
- a message of agreement for accepting an exchange of messages initiated by the server.

14. The method according to one of claims 9 to 13, wherein the method comprises a step of certifying a first message (SMS) to be established by the browser (NV) and to be transmitted from the smart card, through the mobile terminal, according to one function of a library (BI) stored within the smart card, in response to a second message preceding the first message and further comprising a request for certification by the server (SV).

15. A system for communicating with at least one server, the system comprising a mobile terminal and at least one smart card (SIM), the smart card being included within the mobile terminal, the mobile terminal comprising a display screen (A), the system being liable to be connected to a radiotelephony network, the at least one server being external to the radiotelephony network,
**characterized in that** the smart card is adapted to:
- trigger the implementation of a browser (NV) hosted within the smart card;
- execute an exchange of messages, with the exchange of messages comprising at least the following two steps of:
- transmitting (N1 or S2) a first message (SMS) initiated by a subscriber and established by the browser (NV) to the server (SV), and
- receiving (N2 or S1) a second message (ESMS) transmitted from the server (SV) to the browser, the second message comprising data to be displayed and an executable code, the browser (NV) interpreting a content of the second message, the browser (NV) executing the executable code and ordering a display of the data to be displayed included within the second message on the display screen (A) of the mobile terminal (MS), so that the service is executed by the server which interacts, via the browser of the smart card, with the subscriber.
